(19) Europäisches Patentamt
European Patent Office
Office européen des brevets

(11) **EP 3 541 676 B1**

(12) **EUROPÄISCHE PATENTSCHRIFT**

(45) Veröffentlichungstag und Bekanntmachung des Hinweises auf die Patenterteilung:
**23.11.2022 Patentblatt 2022/47**

(21) Anmeldenummer: **17787128.2**

(22) Anmeldetag: **05.10.2017**

(51) Internationale Patentklassifikation (IPC):
**B60W 30/18** (2012.01)      **B60W 50/00** (2006.01)
**B60W 50/14** (2020.01)

(52) Gemeinsame Patentklassifikation (CPC):
**B60W 30/18072; B60W 50/0097; B60W 50/14;**
B60W 2030/18081; B60W 2030/1809;
B60W 2520/10; B60W 2552/15; B60W 2720/106;
Y02T 10/40; Y02T 10/84

(86) Internationale Anmeldenummer:
**PCT/EP2017/075285**

(87) Internationale Veröffentlichungsnummer:
**WO 2018/091196 (24.05.2018 Gazette 2018/21)**

(54) **VERFAHREN, COMPUTER-LESBARES MEDIUM, SYSTEM, UND FAHRZEUG UMFASSEND DAS SYSTEM ZUM UNTERSTÜTZEN EINER ENERGIEEFFIZIENTEN VERZÖGERUNG DES FAHRZEUGS**

METHOD, COMPUTER-READABLE MEDIUM, SYSTEM, AND VEHICLE COMPRISING SAID SYSTEM FOR SUPPORTING ENERGY-EFFICIENT DECELERATION OF THE VEHICLE

PROCÉDÉ, SUPPORT LISIBLE PAR ORDINATEUR, SYSTÈME ET VÉHICULE COMPORTANT UN SYSTÈME PERMETTANT DE FACILITER UN RALENTISSEMENT EFFICACE SUR LE PLAN ÉNERGÉTIQUE DU VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.11.2016 DE 102016222734**

(43) Veröffentlichungstag der Anmeldung:
**25.09.2019 Patentblatt 2019/39**

(73) Patentinhaber: **Bayerische Motoren Werke Aktiengesellschaft**
**80809 München (DE)**

(72) Erfinder:
• **VAN GELIKUM, Mark**
**81673 München (DE)**
• **LINDHUBER, Stefan**
**82140 Neu-Esting (DE)**

(56) Entgegenhaltungen:
**EP-A2- 2 460 708**      **DE-A1-102008 045 811**
**DE-A1-102009 031 085**      **DE-A1-102012 013 509**
**DE-A1-102012 213 229**      **DE-A1-102014 222 140**

**EP 3 541 676 B1**

**Beschreibung**

Die Erfindung betrifft ein Verfahren zum Unterstützen einer energieeffizienten Verzögerung eines Fahrzeugs und zur Berechnung eines Energieeinsparpotentials aufgrund einer ineffizienten Verzögerung. Ferner betrifft die Erfindung ein Computer-lesbares Medium, ein System und ein Fahrzeug umfassend das System zum Unterstützen einer energieeffizienten Verzögerung des Fahrzeugs.

Es ist bekannt, dass Fahrzeuge verschiedene Fahrerassistenzsysteme umfassen können, die den Fahrer bei der Verzögerungen des Fahrzeugs unterstützen. Beispielsweise kann ein Verzögerungsassistent einen Fahrer informieren, ob er eine Ampel noch bei Grün erreichen kann oder ob er die Geschwindigkeit bereits reduzieren soll. Ferner ist bekannt, eine Fahrstilanalyse eines Fahrers nach qualitativen Kriterien vorzunehmen.

DE 10 2012 013509 A1 offenbart ein Verfahren und eine Vorrichtung zum Unterstützen einer effizienten Fahrweise eines Fahrers eines Kraftfahrzeugs, wobei das Kraftfahrzeug eine Navigationsvorrichtung mit einer digitalen Karte zum Bestimmen der Fahrzeugposition und der Positionsattribute und zur Routenführung, eine Steuervorrichtung, eine Speichervorrichtung und eine HMI-Vorrichtung aufweist, wobei das Verfahren die folgenden Schritte umfasst: Erfassen einer typischen Fahrphase innerhalb einer Fahrstrecke und Bestimmen der Fahrkurve der typischen Fahrphase in Form eines Geschwindigkeitsprofils mit einer Startgeschwindigkeit und einer Endgeschwindigkeits- und Positionsanzeige, Analysieren der Fahrkurve in Bezug auf ineffiziente Abschnitte und Bestimmen einer optimierten Fahrkurve, Speichern der optimierten Fahrkurve in Bezug auf die typische Fahrphase und Erzeugen einer Notiz an den Fahrer auf der Grundlage der optimierten Fahrkurve, wenn die Fahrstrecke erneut befahren wird, um den Wirkungsgrad der Fahrweise.

DE 10 2014 222140 A1 offenbart ein Verfahren zum Bewerten des momentanen Kraftstoffverbrauchs eines Kraftfahrzeugs während einer Fahrt anhand von aktuell gemessenen Verbrauchsdaten sowie von Verbrauchsdaten, die während früherer Fahrten gewonnen und gespeichert wurden. Es werden während jeder Fahrt fortlaufend auch Geschwindigkeitsdaten und Beschleunigungsdaten zu den Verbrauchsdaten gewonnen und gespeichert, und der Kraftstoffverbrauch wird anhand der Verbrauchsdaten während einer Vielzahl von Geschwindigkeits- und Beschleunigungsintervallen früherer Fahrten bewertet.

EP 2 460 708 A2 offenbart die Ermittlung des Kraftstoffverbrauchs der Brennkraftmaschine bei aktivierter Wankfunktion im Leerlauf des Motors. Das Getriebeausgangsdrehmoment wird annähernd auf Null gesetzt und der Kraftstoffverbrauch der Brennkraftmaschine bei deaktivierter Wankfunktion ermittelt. Die akkumulierte Differenz zwischen Kraftstoffverbrauch bei deaktivierter Wankfunktion und Kraftstoffverbrauch bei aktivierter Wankfunktion wird ermittelt.

DE 10 2012213229 A1 offenbart ein Verfahren, welches das Erfassen eines bevorstehenden Verzögerungsmanövers beinhaltet. Das Verzögerungsmanöver ist in zwei Phasen aufgeteilt. Ein Antriebsmotor wird durch entkoppelte Antriebsräder in einer Segelphase betätigt. Der Antriebsmotor wird mit den gekoppelten Antriebsrädern in einer Schubentrollphase betätigt.

Es ist daher eine Aufgabe der Erfindung, eine quantitative Energieverbrauchsbewertung einer Verzögerung eines Fahrzeugs effizient zu ermöglichen. Insbesondere ist es eine Aufgabe der Erfindung ein quantitatives Energieeinsparpotential einer Verzögerung eines Fahrzeugs flexibel und effizient bereitzustellen.

Gelöst wird diese Aufgabe durch die Merkmale der unabhängigen Ansprüche. Vorteilhafte Ausgestaltungen und Weiterbildungen der Erfindung ergeben sich aus den abhängigen Ansprüchen.

Gemäß einem ersten Aspekt zeichnet sich die Erfindung aus durch ein Verfahren zum Unterstützen einer energieeffizienten Verzögerung eines Fahrzeugs. Das Verfahren umfasst ein Ermitteln einer Referenzverzögerung in Abhängigkeit einer aktuellen Geschwindigkeit des Fahrzeugs und optional einer Steigung. Der Verfahren kann auf einem Steuergerät des Fahrzeugs, und/oder einem Simulationsrechner und/oder einem Backend-Service ausgeführt werden. Das Verfahren kann in Echtzeit während einer Verzögerung des Fahrzeugs ausgeführt werden. Alternativ kann das Verfahren nach einer erfolgten Verzögerung des Fahrzeugs ausgeführt werden. Die energieeffiziente Referenzverzögerung, insbesondere eine Stärke der Referenzverzögerung, kann auf einem Steuergerät des Fahrzeugs beispielsweise in Abhängigkeit von der Geschwindigkeit und der Fahrbahnneigung hinterlegt bzw. gespeichert sein. Eine gespeicherte Referenzverzögerung kann aus dem Speicher des Steuergeräts in Abhängigkeit der aktuellen Geschwindigkeit des Fahrzeugs ausgelesen werden.

Das Verfahren umfasst weiterhin ein Bestimmen eines Startzeitpunkts tstart und einer Startgeschwindigkeit vstart einer Verzögerung des Fahrzeugs, wobei der Startzeitpunkt tstart der Verzögerung ein Zeitpunkt ist, an dem die ermittelte Referenzverzögerung für ein vordefiniertes Zeitintervall erstmalig überschritten wird. Ferner umfasst das Verfahren ein Ermitteln eines realen Energieverbrauchs und einer realen Strecke zwischen dem Startzeitpunkt und dem aktuellen Zeitpunkt der Verzögerung. Der reale Energieverbrauch kann beispielsweise die Menge an verbrauchtem Kraftstoff oder an verbrauchter elektrischer Energie sein. Die reale Strecke ist die zurückgelegte Wegstrecke während des Verzögerungsvorgangs des Fahrzeugs.

Das Verfahren umfasst ein Berechnen einer Referenzzeit und einer Referenzstrecke für eine Verzögerung mit der ermittelten Referenzverzögerung zwischen der bestimmten Startgeschwindigkeit und der bestimmten aktuellen

2

Geschwindigkeit. Die Referenzzeit ist die Zeit, die für eine Verzögerung des Fahrzeugs mit der Referenzverzögerung benötigt wird. Die Referenzstrecke ist die Strecke, die für eine Verzögerung mit der Referenzverzögerung benötigt wird. Bei einer ineffizienten Verzögerung ist die ermittelte Referenzverzögerung geringer als die reale Verzögerung des Fahrzeugs, so dass die Referenzzeit der Referenzverzögerung und die Referenzstrecke der Referenzverzögerung länger im Vergleich zu der Zeit und der Strecke der realen Verzögerung sind. Das Verfahren umfasst weiterhin ein Berechnen eines Energieverbrauchs einer Konstantfahrt mit Startgeschwindigkeit $v_{Start}$ für eine Differenzstrecke aus der ermittelten realen Strecke und der berechneten Referenzstrecke. Um den Energieverbrauch einer realen Verzögerung und einer Referenzverzögerung vergleichbar zu machen, ist der Energieverbrauch für die reale Verzögerung und der Referenzverzögerung für die gleiche Streckenlänge zu bestimmen. Die Differenzstrecke ergibt sich dadurch, dass die Referenzverzögerung kleiner als die reale Verzögerung ist und dadurch die Strecke der Referenzverzögerung länger ist als die Strecke der realen Verzögerung. Durch das Berechnen des Energieverbrauchs für die Differenzstrecke kann der Energieverbrauch der realen Verzögerung und der Referenzverzögerung für die gleiche Streckenlänge angegeben werden.

Das Verfahren umfasst ein Berechnen eines realen Gesamtenergieverbrauchs als Summe des ermittelten realen Energieverbrauchs der Verzögerung und des berechneten Energieverbrauchs für die Differenzstrecke und ein Berechnen eines Referenzenergieverbrauchs für die Referenzverzögerung z.B. in Abhängigkeit des ermittelten realen Energieverbrauchs der Verzögerung. Der Referenzenergieverbrauch kann beispielsweise berechnet werden, in dem der reale Energieverbrauch entsprechend der längeren Verzögerungsdauer skaliert wird. Alternativ kann der Referenzverbrauch über einen Leerlaufverbrauch, sofern relevant, und den Energiebedarf von Nebenverbrauchern ermittelt werden.

Das Verfahren umfasst ein Bereitstellen eines quantitativen Energieeinsparpotentials basierend auf einer Differenz des realen Gesamtenergieverbrauchs und des berechneten Referenzenergieverbrauchs. Das Energieeinsparpotential kann absolut oder relativ angegeben werden. Das Bereitstellen des Energieeinsparpotentials kann ein Ausgeben des Energieeinsparpotentials auf einem Anzeigegerät und/oder einer Ausgabeschnittstelle des Fahrzeugs umfassen. Ferner kann das Bereitstellen des Energieeinsparpotentials ein Übermitteln des Energieeinsparpotentials an ein oder mehrere Steuergeräte, und/oder Simulationsrechner und/oder an einen Backend-Service umfassen.

Vorteilhafterweise kann das Energieeinsparpotential für jede Verzögerung des Fahrzeugs mit einer realen Verzögerung oberhalb der Referenzverzögerung quantitativ ermittelt werden. Eine Fahrt mit dem Fahrzeug kann somit objektiv bezüglich ihrer Effizienz bei Verzögerungen bewertet werden. Die Genauigkeit des Energieeinsparpotentials kann ferner effizient erhöht werden, in dem der reale Energieverbrauch und der Referenzenergieverbrauch bezogen auf die gleiche Streckenlänge berechnet werden. Der Fahrer eines Fahrzeugs kann während des Verzögerungsvorgangs, z.B. zu einem aktuellen Zeitpunkt eines Verzögerungsvorgangs, ein mögliches Energieeinsparpotentials erhalten und die darauf folgenden Verzögerungen des Fahrzeugs entsprechend anpassen, um das Fahrzeug energieeffizient zu verzögern. Ein ineffizientes Verzögern eines Fahrzeugs kann somit erkannt und dem Fahrer mitgeteilt werden. Die eingesparte Energie kann beispielsweise zu einer Reichweitenverlängerung des Fahrzeugs führen, die der Fahrer nutzen kann, um ein Reiseziel ohne zusätzliche Lade- bzw. Tankstopps zu erreichen. Ferner kann der Fahrer kontinuierlich lernen, wie das Fahrzeug effizient verzögert werden kann und wie viel Energie dabei eingespart werden kann. Die Fahrweise des Fahrers kann somit quantitativ und objektiv ermittelt und bewertet werden.

Gemäß einer vorteilhaften Ausgestaltung kann die geschwindigkeitsabhängige Referenzverzögerung in Abhängigkeit der aktuellen Steigung der Fahrbahn korrigiert werden. Hiermit kann eine dynamische Anpassung der Referenzverzögerung erfolgen, so dass der Energieverbrauch der Referenzverzögerung und damit das Energieeinsparpotentials präziser berechnet werden können.

Gemäß einer weiteren vorteilhaften Ausgestaltung kann der Referenzenergieverbrauch für eine der folgenden vordefinierten Verzögerungsarten der Referenzverzögerung ermittelt werden: Eine Referenzverzögerung eines Segelvorgangs mit einem eingeschalteten Antrieb des Fahrzeugs vorzugsweise unter Berücksichtigung des Leerlaufverbrauchs, eine Referenzverzögerung eines Segelvorgangs mit einem ausgeschaltetem Antrieb des Fahrzeugs, eine Referenzverzögerung unter einer Schubabschaltung des Antriebs des Fahrzeugs, und/oder eine Referenzverzögerung unter Rekuperation von kinetischer Energie in einen fahrzeuginternen Speicher. Zusätzlich oder alternativ kann der Referenzenergieverbrauch über eine zeitliche Skalierung des Energieverbrauchs der Realverzögerung ermittelt werden.

Hiermit können effizient verschiedene Verzögerungsvorgänge berücksichtigt werden und der Energiemehrverbrauch bzw. das mögliche Energieeinsparpotential gegenüber den effizienten Referenzverzögerungsvorgängen quantitativ bestimmt werden.

Gemäß einer weiteren, vorteilhaften Ausgestaltung kann der aktuelle Zeitpunkt ein Endzeitpunkt $t_{Ende}$ der Verzögerung sein, kann die aktuelle Geschwindigkeit eine Endgeschwindigkeit $v_{Ende}$ der Verzögerung sein, und/oder können der aktuelle Zeitpunkt und die aktuelle Geschwindigkeit solange bestimmt werden, bis der Endzeitpunkt der Verzögerung und die Endgeschwindigkeit der Verzögerung erreicht werden. Hiermit kann das Energieeinsparpotential für einen vollständigen Verzögerungsvorgang zwischen dem Startzeitpunkt und dem Endzeitpunkt und zwischen der Startgeschwindigkeit und der Endgeschwindigkeit ermittelt werden. Für eine effiziente Berechnung z.B. im Fahrzeug, kann beispielsweise eine einmalige Berechnung des Referenzenergieverbrauchs erst mit Erreichen der Endgeschwindigkeit erfolgen, so dass eine mehrfache Berechnung des Referenzenergieverbrauchs vermieden werden kann.

Gemäß einer weiteren, vorteilhaften Ausgestaltung kann zur Berechnung des Einsparpotentials Startzeitpunkt der Verzögerung der Zeitpunkt sein, an dem ein Betätigen einer Bremse des Fahrzeugs erfasst wird, und/oder kann die Startgeschwindigkeit die aktuelle Geschwindigkeit des Fahrzeugs zu dem Startzeitpunkt der Verzögerung sein. Hiermit kann das Berechnen des Energieeinsparpotentials effizient beschränkt werden auf Verzögerungen des Fahrzeugs, die über der entsprechenden Referenzverzögerung liegen, und eine gewisse, vorgegebene Zeit andauern. Ferner kann das Berechnen des Energieeinsparpotentials in Abhängigkeit weiterer Bedingungen wie beispielsweise das gleichzeitige Betätigen der Bremse des Fahrzeugs erfolgen.

Gemäß einer weiteren, vorteilhaften Ausgestaltung kann der Energieverbrauch der Differenzstrecke für eine Konstantfahrt mit der bestimmten Startgeschwindigkeit berechnet werden. Hiermit wird die Vergleichbarkeit des Energieverbrauchs der realen Verzögerung und der Referenzverzögerung ermöglicht. Beide, der Energieverbrauch der realen Verzögerung und der Referenzenergieverbrauch können auf Basis der gleichen Streckenlänge verglichen werden, in dem der Energieverbrauch einer Konstantfahrt mit der Startgeschwindigkeit der Verzögerung für die Differenzstrecke berücksichtigt wird. Eine leichte Verzögerung kann deshalb zu einem niedrigeren Energiebedarf führen, da zum Erreichen des gleichen streckenbezogenen Zielpunkts die Verzögerung früher eingeleitet werden muss, d.h. die zurückliegende, deutlich energieintensivere Konstantfahrt oder Beschleunigung liegt weniger lang an.

Gemäß einer weiteren, vorteilhaften Ausgestaltung kann das Verfahren weiterhin ein Bereitstellen eines Verzögerungshinweises, wobei vorzugsweise der Verzögerungshinweis ein Verzögerungsziel enthält, an einen Fahrer des Fahrzeugs und ein Bestimmen eines Startzeitpunkts und einen Endzeitpunkt des Verzögerungshinweises umfassen. Der Verzögerungshinweis kann eine Nachricht oder ein Signal sein, die dem Fahrer des Fahrzeugs mitteilt, eine vorgegebene Verzögerung auszuführen. Falls der Fahrer des Fahrzeugs den bereitgestellten Verzögerungshinweis übergeht, kann das Verfahren ein Ermitteln eines realen Energieverbrauchs zwischen dem Startzeitpunkt des Verzögerungshinweises und dem Endzeitpunkt des Verzögerungshinweises, ein Ermitteln eines Referenzenergieverbrauchs einer Referenzverzögerung in Abhängigkeit des Verzögerungshinweises, ein Berechnen eines Differenzenergieverbrauchs zwischen dem realen Energieverbrauch und dem Referenzenergieverbrauch, und somit ein Bereitstellen eines Energieeinsparpotentials für den bereitgestellten Verzögerungshinweis unter Verwendung des berechneten Differenzenergieverbrauchs umfassen. Führt ein Fahrer des Fahrzeugs die in dem Verzögerungshinweis angegebene Verzögerung aus, kann er das Fahrzeug effizient verzögern. Ein Nichtbeachten oder ein Übergehen des bereitgestellten Verzögerungshinweises kann zu einer ineffizienten Verzögerung führen, die mit einem Energiemehrverbrauch einhergehen kann. Vorteilhafterweise kann effizient ein Energieeinsparpotential für das Nichtbeachten von Verzögerungshinweisen berechnet und/oder dem Fahrer des Fahrzeugs bereitgestellt werden. Außerdem kann die eingesparte Energiemenge berechnet werden, die sich durch eine effizientere Verzögerung z.B. aufgrund der Befolgung von Verzögerungshinweisen gegenüber einer definierten Referenzverzögerung ergibt.

Gemäß einer weiteren, vorteilhaften Ausgestaltung kann der Endzeitpunkt des Verzögerungshinweises der Zeitpunkt sein, an dem das Verzögerungsziel des Verzögerungshinweises erreicht ist. Hiermit kann der Endzeitpunkt der Berechnung des Energieeinsparpotentials flexibel bestimmt werden.

Gemäß einem weiteren Aspekt zeichnet sich die Erfindung aus durch ein Computer-lesbares Medium zum Unterstützen eines energieeffizienten Verzögerns eines Fahrzeugs, wobei das Computer-lesbares Medium Instruktionen umfasst, die, wenn ausgeführt auf einem Steuergerät, das oben beschriebene Verfahren ausführen.

Gemäß einem weiteren Aspekt zeichnet sich die Erfindung aus durch ein Fahrerassistenzsystem zum Unterstützen eines energieeffizienten Verzögerns eines Fahrzeugs. Das Fahrerassistenzsystem umfasst ein Steuergerät und einen Energieverbrauchsassistenten, der auf dem Steuergerät ausgeführt wird, wobei der Energieverbrauchassistent dazu ausgebildet ist, das oben beschriebene Verfahren auszuführen.

Gemäß einem weiteren Aspekt zeichnet sich die Erfindung aus durch ein Fahrzeug umfassend das oben beschriebene Fahrerassistenzsystem.

Weitere Merkmale der Erfindung ergeben sich aus den Ansprüchen, den Figuren und der Figurenbeschreibung. Alle vorstehend in der Beschreibung genannten Merkmale und Merkmalkombinationen sowie die nachfolgend in der Figurenbeschreibung genannten und/oder in den Figuren allein gezeigten Merkmale und Merkmalkombinationen sind nicht nur in der jeweils angegebenen Kombination, sondern auch in anderen Kombinationen oder aber in Alleinstellung verwendbar.

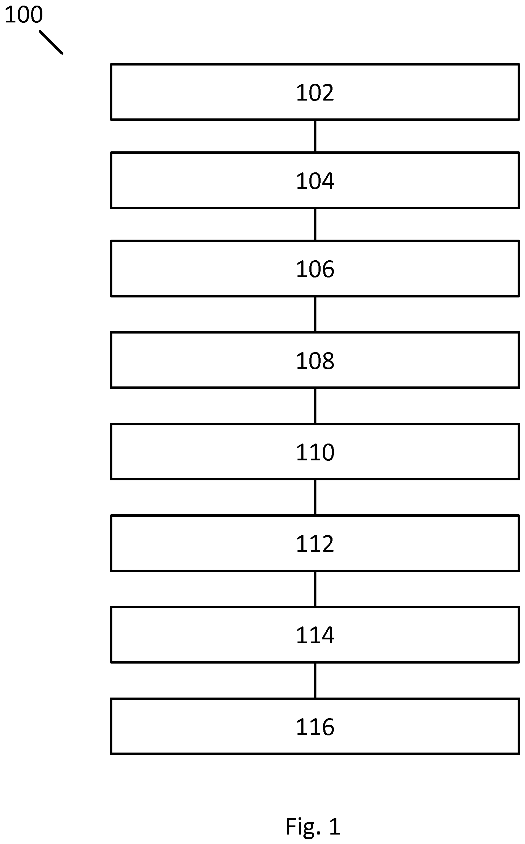

Im Folgenden wird anhand der beigefügten Zeichnung ein bevorzugtes Ausführungsbeispiel der Erfindung beschrieben. Daraus ergeben sich weitere Details, bevorzugte Ausgestaltungen und Weiterbildungen der Erfindung. Im Einzelnen zeigt schematisch Fig. 1 ein Verfahren zum Unterstützen eines energieeffizienten Verzögerns eines Fahrzeugs.

Das in Fig. 1 beschriebene Verfahren kann in Echtzeit oder alternativ nach einer abgeschlossenen Verzögerung und/oder einer abgeschlossenen Fahrt berechnet werden. Das Verfahren kann einen Energiemehrverbrauch durch eine ineffiziente Verzögerung gegenüber einer effizienten Referenzverzögerung bestimmen und ein Energieeinsparpotential angeben, das sich gegenüber der effizienten Referenzverzögerungen ergibt. Die Gründe für eine ineffiziente Verzögerung können beispielsweise ineffiziente Verzögerungsstärken und/oder Verzögerungshinweise sein, die der Fahrer des Fahrzeugs übergeht bzw. nicht befolgt.

Neben der Berechnung eines quantitativen Energieeinsparpotentials kann das Verfahren auch eine quantitative Energieeinsparung berechnen. Bei der Berechnung der quantitativen Energieeinsparung liegt die Realverzögerungsstärke unterhalb der Referenzverzögerungsstärke. Es kann also der energetische Vorteil berechnet werden, der sich durch eine effizientere Verzögerung als die definierte geschwindigkeits- und gegebenenfalls steigungsabhängige Referenzverzögerung eingestellt hat. Die Berechnung der quantitativen Energieeinsparung erfolgt analog zur Berechnung des Energieeinsparpotentials, mit dem Unterschied, dass bei der Berechnung der quantitativen Energieeinsparung Start- und Abbruchbedingungen anzupassen sind sowie die Realverzögerung länger als die Referenzverzögerung ist. Daher ist zum Ausgleich der unterschiedlichen Strecken statt der Realverzögerung nun die Referenzverzögerung um eine theoretische Konstantfahrt mit $v_{Start}$ zu verlängern. Die im Folgenden beschriebene Berechnung des quantitativen Energieeinsparpotentials kann somit auch auf die Berechnung der quantitativen Energieeinsparung mit den oben beschriebenen Unterschieden angewandt werden.

Fig. 1 zeigt ein Verfahren 100 zum Unterstützen einer energieeffizienten Verzögerung eines Fahrzeugs. Insbesondere umfasst das Verfahren ein Berechnen eines Energieeinsparpotentials bei Überschreiten einer Referenzverzögerungsstärke $Kr_{Pot,Verz}$ und/oder ein Verfahren zum Berechnen eines Energieeinsparpotentials bei Übergehen eines Verzögerungshinweises $Kr_{Pot,VZA}$. Beide Energieeinsparpotentiale, das Energieeinsparpotential bei Überschreiten einer Referenzverzögerungsstärke $Kr_{Pot,Verz}$ und das Energieeinsparpotential bei Übergehen eines Verzögerungshinweises $Kr_{Pot,VZA}$ können summiert werden, um eine Gesamtenergieeinsparpotential $Kr_{Pot}$ zu berechnen: $Kr_{Pot} = Kr_{Pot,Verz} + Kr_{Pot,VZA}$. Das Gesamtenergieeinsparpotential kann pro Verzögerung nur für eines der beiden Energieeinsparpotentiale berechnet werden. Hat beispielsweise ein Fahrzeug kein Fahrerassistenzsystem, das Verzögerungshinweise für einen Fahrer bereitstellen kann, ist das Gesamtenergieeinsparpotential gleich dem Energieeinsparpotentials bei Überschreiten einer Referenzverzögerungsstärke. Die beiden Energieeinsparpotentiale können also getrennt voneinander bereitgestellt werden oder zu einem Gesamtenergieeinsparpotential zusammengefasst werden.

Das Berechnen eines Energieeinsparpotentials $Kr_{Pot,Verz}$ analysiert Verzögerungen bei denen eine Referenzverzögerungsstärke für eine bestimmte Zeit überschritten wurde. Das Energieeinsparpotential entspricht einem Energiemehrverbrauch, der sich durch eine Verzögerung mit der Referenzverzögerung bei einem gleichen Geschwindigkeitsdelta einstellt. Dieser Energiemehrverbrauch kann eingespart werden, wenn der Fahrer das Fahrzeug mit der Referenzverzögerung verzögert. Für Verzögerungen unterhalb der Referenzverzögerungen, entspricht die quantitative Energieeinsparung der eingesparten Energiemenge, die sich gegenüber einer Verzögerung mit Referenzverzögerungsstärke einstellt. Bei einem Fahrzeug mit Verbrennungsmotor kann das Energieeinsparpotential einen Kraftstoffmehrverbrauch angeben. Bei einem Fahrzeug mit einem elektrischen Antrieb kann das Energieeinsparpotential einen Mehrverbrauch an elektrischer Energie bzw. eine Einsparung derselben angeben. Eine Verzögerung des Fahrzeugs mit der Referenzverzögerung kann von einem Fahrer des Fahrzeugs realisiert werden. Die Referenzverzögerung kann geschwindigkeits- und/oder steigungsabhängig definiert werden.

Überschreitet der Fahrer während einer Fahrt mit dem Fahrzeug eine vorgegebene Referenzverzögerung, kann ein Steuergerät des Fahrzeugs automatisiert ein Energieeinsparpotential für diesen Fahrabschnitt berechnen. Das Steuergerät kann die Berechnung des Energieeinsparpotentials in Echtzeit ausführen, so dass der Fahrer des Fahrzeugs während der Verzögerung des Fahrzeugs das zu erreichende Energieeinsparpotential der aktuellen Verzögerung gegenüber der entsprechenden Referenzverzögerung angezeigt bekommt und die Möglichkeit hat, die aktuelle Verzögerung des Fahrzeugs an die effizientere Referenzverzögerung anzupassen. Das Steuergerät kann beispielsweise dem Fahrer aktuelle Werte des Energieeinsparpotentials auf die bis zum aktuellen Zeitpunkt gefahrene Strecke der Verzögerung berechnen und dem Fahrer bereitstellen. Zur Steigerung der Recheneffizienz berechnet das Steuergerät das Energieeinsparpotential bei Abschluss der ineffizienten Verzögerung, z.B. wenn die Verzögerungsstärke wieder unter die Referenzverzögerungsstärke gefallen ist, rückwirkend für das zu betrachtende Fahrmanöver. Allerdings ist der reale Energieverbrauch vorzugsweise bereits ab Überschreitung der Referenzverzögerung zu berücksichtigen.

Zusätzlich kann das Berechnen des Energieeinsparpotentials einer Verzögerung durch das Steuergerät in Abhängigkeit von einer oder mehreren vorgegebenen fahrzeugspezifischen Parametern und/oder Ereignissen ausgeführt werden: Beispielsweise kann das Berechnen des Energieeinsparpotentials einer Verzögerung gestartet werden, falls:

- der Betrag der aktuellen Verzögerung seit einem vorgegeben Zeitintervall, z.B. seit mindestens 0,5 s, über dem Betrag der geschwindigkeits- und/oder steigungsabhängigen Referenzverzögerung, liegt;
- die Geschwindigkeit des Fahrzeugs oberhalb eines vorgegebenen Schwellwerts, z.B. oberhalb von 10 km/h , liegt;
- ein Verzögerungshinweis nicht bereitgestellt und/oder dem Fahrer angezeigt wird;
- keine andere Berechnung eines Energieeinsparpotentials, z.B. eine Berechnung eines Energieeinsparpotentials für einen Verzögerungshinweis $Kr_{Pot,VZA}$ durch das Steuergerät ausgeführt wird; und/oder

Das Verfahren 100 kann zunächst eine Referenzverzögerung, vorzugsweise in Abhängigkeit einer aktuellen Geschwindigkeit des Fahrzeugs, ermitteln 102. Dazu kann auf dem Steuergerät des Fahrzeugs, auf dem die Berechnung ausgeführt wird, eine vordefinierte Referenzverzögerung gespeichert sein, die als Referenz für die Berechnung des Energieeinsparpotentials einer Verzögerung verwendet werden kann. Beispielsweise kann auf dem Steuergerät eine Tabelle gespeichert sein, die in Abhängigkeit einer aktuellen Geschwindigkeit die Referenzverzögerung angibt:

| $v_{Ist}$ [km/h] | 0 | 50 | 100 | 150 | 200 | 250 |
|---|---|---|---|---|---|---|
| $a_{Ref,Verz}$ [m/s$^2$] | -1 | -1,1 | -1,6 | -2 | -2,4 | -2,4 |

Ferner kann die gespeicherte Referenzverzögerung angepasst bzw. korrigiert werden, um die aktuelle Steigung der Fahrbahn und damit den Anteil der Gravitationsbeschleunigung entlang der Fahrbahn zu berücksichtigen. Zusätzlich können Grenzen sowohl für die Höhe des Korrekturwertes als auch für die resultierende korrigierte Referenzbeschleunigung festgelegt werden, um unplausible oder zu große bzw. kleine Verzögerungsstärken zu verhindern.

Beispielsweise kann die korrigierte Referenzverzögerung wie folgt durch das Steuergerät des Fahrzeugs bestimmt werden:

$$a_{Ref,Verz,korr} = \min\left[-0.5 \text{ m/s}^2 \, ; \, \max\left[\begin{array}{c} -3,5 \text{ m/s}^2 \, ; \, a_{Ref,Verz} \, + \\ \min\left(\max\left(9,81 \text{ m/s}^2 * \sin(\alpha_{St}); -1,5 \text{ m/s}^2\right); 1,5 \text{ m/s}^2\right)\end{array}\right]\right]$$

wobei $\alpha_{St}$ die aktuelle Steigung der Fahrbahn in Grad ist.

Nach dem Ermitteln 102 einer Referenzverzögerung kann das Verfahren 100 einen Startzeitpunkt $t_{Start,Verz}$ und eine Startgeschwindigkeit $v_{Start,Verz}$ einer Verzögerung des Fahrzeugs bestimmen 104. Beispielsweise kann der Startzeitpunkt $t_{Start,Verz}$ als der Zeitpunkt bestimmt werden, an dem die Referenzverzögerung $a_{Ref,Verz}$, beziehungsweise die korrigierte Referenzverzögerung $a_{Ref,Verz,korr}$, überschritten wird. Beispielsweise kann der Startzeitpunkt $t_{Start,Verz}$ als der Zeitpunkt bestimmt werden, an dem die Referenzverzögerung $a_{Ref,Verz}$, beziehungsweise die korrigierte Referenzverzögerung $a_{Ref,Verz,korr}$, bei einer gleichzeitigen Bremspedalbetätigung erstmals durchgängig für ein vorgegebenes Zeitintervall, z.B. 0,5 Sekunden, überschritten wird.

Ferner kann das Verfahren 100 einen realen Energieverbrauch ermitteln und eine real gefahrene Strecke $s_{Real,Verz}$ zwischen dem Startzeitpunkt und dem aktuellen Zeitpunkt bzw. dem Endzeitpunkt der Verzögerung bestimmen 106. Der aktuelle Zeitpunkt und die aktuelle Geschwindigkeit können einem Endzeitpunkt $t_{Ende,Verz}$ und einer Endgeschwindigkeit $v_{Ende,Verz}$ entsprechen, wenn beispielsweise die Verzögerung des Fahrzeugs die Referenzverzögerung wieder unterschreitet. Alternativ kann der Endzeitpunkt $t_{Ende,Verz}$ beispielsweise als der Zeitpunkt ermittelt werden, an dem der Betrag der Referenzverzögerung, $a_{Ref,Verz,korr}$ durchgängig seit einem vorgegebenen Zeitintervall, z.B. 0,5, 0,6, 0,7, 0,8, 0,9, 1,0, 1,1, ...Sekunden, wieder unterschritten wird und/oder eine Bremspedalbetätigung nicht mehr erfolgt ist und/oder die aktuelle Geschwindigkeit des Fahrzeugs unter einen vorgegeben Schwellwert, z.B. 10 km/h, fällt. Zum jeweiligen Endzeitpunkt $t_{Ende,Verz}$ kann das Steuergerät die Endgeschwindigkeit $v_{Ende,Verz}$ ermitteln. Der reale Energieverbrauch kann beispielsweise der reale Kraftstoffverbrauch und/oder der reale elektrische Energieverbrauch sein. Der reale Energieverbrauch während der Verzögerung kann beispielsweise berechnet werden, indem das Steuergerät den tatsächlichen Energieverbrauch, z.B. den tatsächlichen Kraftstoffverbrauch $Kr_{Einspr,Verz}$ [l], zwischen dem Startzeitpunkt der Verzögerung und dem aktuellen Zeitpunkt der Verzögerung bzw. dem Endzeitpunkt der Verzögerung integriert. Die reale Strecke $s_{Real,Verz}$, während der der Betrag der Referenzverzögerung $a_{Ref,Verz,korr}$ überschritten wird, kann beispielsweise durch Sensorik des Fahrzeugs, z.B. unter Verwendung eines Beschleunigungs-, GPS-Sensors oder eines Raddrehzahlgebers, von dem Steuergerät berechnet werden.

Das Verfahren 100 kann weiterhin eine Referenzzeit $\Delta t_{Ref,Verz}$ und eine Referenzstrecke $s_{Ref,Verz}$ für die Verzögerung mit der ermittelten Referenzverzögerungsstärke $a_{Ref,Verz,korr}$ zwischen der Startgeschwindigkeit $v_{Start,Verz}$ und der Endgeschwindigkeit $v_{Ende,Verz}$ berechnen 108. Beispielsweise kann die Referenzstrecke $s_{Ref,Verz}$ mittels eines Integrals über einen Verlauf der Referenzverzögerung durch das Steuergerät berechnet werden:

$$s_{Ref,Verz} = \int_{t_{Start}}^{t_{Ende}} v_{Fzg,Ist} * \frac{a_{Fzg,Ist}}{a_{Ref,Verz,korr}(v_{Fzg,Ist})} \, dt$$

wobei:

$v_{Fzg,Ist}$: aktuelle Fahrzeuggeschwindigkeit in m/s; und
$a_{Fzg,Ist}$: aktuelle Fahrzeugbeschleunigung in m/s².

Das Verfahren kann einen Energieverbrauch für eine Differenzstrecke aus den Strecken $s_{Ref,Verz}$ und $s_{Real,Verz}$ berechnen 110. Für die Berechnung des Energieverbrauchs der Differenzstrecke kann angenommen werden, dass diese mit einer konstanten Startgeschwindigkeit $v_{Start,verz}$, vor Eintreten der Verzögerung durch das Fahrzeug, gefahren wurde. Der Energieverbrauch, z.B. der Kraftstoffverbrauch, für eine solche "unnötige" theoretische Konstantfahrt stellt ein mögliches Energieeinsparpotential dar, da die Verzögerung zu spät eingeleitet wurde und dadurch die Verzögerung mit einer Verzögerungsstärke oberhalb der Verzögerungsstärke der Referenzverzögerung ausgeführt wurde. Der Energieverbrauch für die theoretische Konstantfahrt kann durch das Steuergerät abgeschätzt werden. Für die Abschätzung des Energieverbrauchs der Konstantfahrt können beispielsweise vordefinierte Verbrauchstabellen auf dem Steuergerät gespeichert sein oder ein Energieverbrauchsmodell des Fahrzeugs verwendet werden, mit dem der Energieverbrauch in Abhängigkeit von Fahrzeugparametern abgeschätzt werden kann.

Der reale Gesamtenergieverbrauch einer Verzögerung kann als Summe des realen Energieverbrauchs der Verzögerung und des Energieverbrauchs für die Differenzstrecke berechnet werden 112. Das Berechnen des realen Gesamtenergieverbrauchs unter Einbeziehung des Verbrauchs für die unnötige theoretische Konstantfahrt ist erforderlich, um eine Vergleichbarkeit mit dem Referenzverbrauch der effizienten Referenzverzögerung auf Basis der gleichen Streckenlänge herzustellen.

Für den Fall, dass der Energieverbrauch einem Kraftstoffverbrauch des Fahrzeugs entspricht, kann der reale Gesamtenergieverbrauch einer Verzögerung $Kr_{Real,verz,Einzel}$ [l] wie folgt berechnet werden:

$$Kr_{Real,Verz,Einzel} = \frac{\max\left(s_{Ref,Verz} - s_{Real,Verz};\ 0\right)}{100} * kr_{thKonst}(v_{Start,Verz}) + Kr_{Einspr,Verz}$$

wobei:

$kr_{thKonst}(v_{Start,Verz})$: der Kraftstoffverbrauch in l/100km für die Konstantfahrt mit der Startgeschwindigkeit $v_{Start,Verz}$. Beispielsweise kann der Energieverbrauch $kr_{thKonst}$ bei einer Fahrt mit der konstanten Startgeschwindigkeit $v_{Start,Verz}$ mithilfe von Fahrwiderständen des Fahrzeug durch ein Steuergerät des Fahrzeug berechnet werden. Mittels der Fahrwiderstände des Fahrzeugs können ein benötigtes Drehmoment an einem Rad des Fahrzeugs und daraus ein benötigtes Drehmoment des Motors des Fahrzeugs bestimmt werden. Unter Verwendung einer dazugehörigen Drehzahl kann mittels eines vorgegebenen Motokennfelds der Kraftstoffverbrauch ermittelt werden. Der Verbrauchseinfluss durch Nebenverbraucher ist in Form eines an einem Generator anliegenden Drehmoments und/oder als eine beispielsweise einen elektrischen Speicher belastende Leistung zu berücksichtigen. $Kr_{Einspr,Verz}$: der Kraftstoffverbrauch, der während der Verzögerung des Fahrzeugs verbraucht wird. Dies beinhaltet beispielsweise den Leerlaufverbrauch sowie den zusätzlichen Verbrauch für die Versorgung von Nebenverbrauchern.

Das Verfahren 100 kann ferner einen Referenzenergieverbrauch für die Referenzverzögerung in Abhängigkeit des realen Energieverbrauchs der Verzögerung des Fahrzeugs berechnen 114.

Der Referenzenergieverbrauch der Referenzverzögerung kann in Abhängigkeit der Verzögerungsarten berechnet werden. Eine Referenzverzögerung kann einem Segelvorgang mit einem eingeschalteten Antrieb des Fahrzeugs, eine Referenzverzögerung eines Segelvorgangs mit einem ausgeschaltetem Antrieb des Fahrzeugs, und/oder eine Referenzverzögerung unter einer Schubabschaltung einer Verbrennungskraftmaschine des Fahrzeugs, und/oder einer Referenzverzögerung mit Rekuperation des (teil-)elektrischen Antriebs des Fahrzeugs erfolgen. Welcher Verzögerungsart für die Referenzverzögerung heranzuziehen ist, kann z.B. mittels einer Abbildung der Betriebsstrategie des Fahrzeugs aus dem Last- und Geschwindigkeitsverlauf sowie der Dauer der Verzögerung ermittelt werden. Bei einem ausgeschalteten Antrieb und während des Schubbetriebs (von Verbrennungskraftmaschinen) sind die Nebenverbraucher des Fahrzeugs zu berücksichtigen. Mit eingeschaltetem Antrieb ergeben sich ggfs. zusätzliche Leerlaufverluste. Eine Verzögerung mit Rekuperation speist kinetische Energie beispielsweise in einen elektrischen Speicher des Fahrzeugs, wodurch sich zunächst ein "Energiegewinn" bzw. ein negativer Verbrauch ergibt. Der Referenzenergieverbrauch der Referenzverzögerung kann alternativ auch mittels einer zeitlichen Skalierung des ermittelten Verbrauchs der realen Verzögerung abgeschätzt werden. Die zeitliche Skalierung berücksichtigt, dass die Referenzverzögerung länger dauert als die reale Verzögerung.

Das Energieeinsparpotential einer Verzögerung $Kr_{Pot,Verz,Einzel}$ kann als Differenz des realen Gesamtenergieverbrauchs $Kr_{Real,Verz,Einzel}$ und des berechneten Referenzenergieverbrauchs $Kr_{Ref,Verz,Einzel}$ berechnet und/oder bereitgestellt werden 118:

$$Kr_{Pot,Verz,Einzel} = Kr_{Real,Verz,Einzel} - Kr_{Ref,Verz,Einzel}$$

Zusätzlich kann die Berechnung des Energieeinsparpotentials einer Verzögerung in Abhängigkeit einer oder mehrerer Bedingungen ausgeführt werden. Beispielsweise kann die Berechnung des Energieeinsparpotentials nur ausgeführt werden, wenn beispielsweise die Referenzverzögerung für ein vorgegebenes Zeitintervall, z.B. 0,5, 0,6, 0,7, 0,8, 0,9, 1,0, 1,1, ...Sekunden, überschritten wird. Ferner können die Energieeinsparpotentiale einzelner Verzögerungen summiert werden, um ein Gesamtenergieeinsparpotential von Verzögerungen $Kr_{Pot,Verz}$ einer Fahrt mit dem Fahrzeug bis zum aktuellen Zeitpunkt während der Fahrt und/oder bis zum Fahrtende zu erhalten.

Das Gesamtenergieeinsparpotential kann beispielsweise streckenbezogen bereitgestellt werden, indem das Gesamtenergieeinsparpotential durch die real gefahrene Strecke seit Fahrtbeginn geteilt wird. Weiter kann auch ein prozentualer Mehrverbrauch einer einzelnen, ineffizienten Verzögerung berechnet werden, indem der Referenzenergieverbrauch einer Verzögerung auf den realen Energieverbrauch einer Verzögerung bezogen wird.

Zusätzlich oder alternativ kann das Steuergerät des Fahrzeugs ein Verfahren ausführen, um das Energieeinsparpotential eines Verzögerungshinweises $Kr_{Pot,VZA}$ zu berechnen. Das Energieeinsparpotential eines Verzögerungshinweises kann definiert werden als ein vorzugsweise streckenbezogener, zusätzlicher Energieverbrauch, der sich durch ein Übergehen oder Nichtbefolgen eines oder mehrerer Verzögerungshinweise ergibt. Ein Verzögerungshinweis kann beispielsweise ein Signal an einen Fahrer sein, einen vorgegebenen Verzögerungsvorgang einzuleiten bzw. durchzuführen, um ein vorgegebenes Verzögerungsziel zu erreichen. Beispielsweise kann ein Verzögerungshinweis signalisieren, einen Ausrollvorgang, einen Segelvorgang, und/oder einen Rekuperationsvorgang zu einer vorgegebenen Zeit zu beginnen, um eine neue, vorgegebene Zielgeschwindigkeit als Verzögerungsziel effizient zu erreichen. Die neue, vorgegebene Zielgeschwindigkeit kann beispielsweise durch ein bald einsetzendes Geschwindigkeitslimit, durch eine bevorstehende Kurve, Kreisverkehr, Kreuzung, Ampelphase und/oder ähnliche Straßen- und/oder verkehrsbezogene Eigenschaften bestimmt werden.

Falls der Fahrer dem Verzögerungshinweis nicht oder nur verzögert folgt, kann sich ein Mehrverbrauch durch die tatsächlich vom Fahrer durchgeführte Verzögerung im Vergleich zu der in dem Verzögerungshinweis vorgeschlagenen Verzögerung ergeben. Dieser Mehrverbrauch kann dem Fahrer als Energieeinsparpotential eines Verzögerungshinweises quantitativ berechnet und bereitgestellt werden. Im Folgenden wird die Berechnung des Energieeinsparpotentials eines Verzögerungshinweises im Detail beschrieben. Ein Steuergerät des Fahrzeugs kann die Berechnung ausführen, falls der Fahrer einen bereitgestellten Verzögerungshinweis nicht oder nur mit einer Verzögerung befolgt. Das Steuergerät kann ferner das Energieeinsparpotential auch während der Fahrt für die bis zum aktuellen Zeitpunkt gefahrene Strecke berechnen und dem Fahrer des Fahrzeug bereitstellen. Die Berechnung des Energieeinsparpotentials eines Verzögerungshinweises kann auf dem Steuergerät des Fahrzeugs ausgeführt werden, um das Energieeinsparpotential in Echtzeit zu berechnen.

Wie bereits oben beschrieben, kann die Berechnung des Energieeinsparpotentials eines Verzögerungshinweises in Abhängigkeit einer oder mehrerer Bedingungen auf dem Steuergerät des Fahrzeugs ausgeführt werden. Beispielsweise kann die Berechnung des Energieeinsparpotentials eines Verzögerungshinweises unter einer oder mehrerer der folgenden Bedingungen auf dem Steuergerät des Fahrzeugs ausgeführt werden:

- Es liegt seit einem vorgegebenen Zeitintervall, z.B. 1 Sekunde, ein Verzögerungshinweis an, der von dem Fahrer des Fahrzeugs übergangen wird. Ein Übergehen eines Verzögerungshinweises kann beispielsweise detektiert werden, indem eine Fahrpedalstellung während eines angezeigten Verzögerungshinweises zu einem beliebigen Zeitpunkt, aber mindestens seit einem vorgegebenen Zeitintervall, z.B. 1 s, nach erstmaliger Anzeige, größer null ist, d.h. das Fahrpedal wird durch den Fahrer gedrückt.
- Optional: Es befindet sich kein fahrendes Vorderfahrzeug auf der eigenen Spur, welches deutlich langsamer ist und/oder einen Bremsvorgang erfordert.

Das Verfahren zur Berechnung des Energieeinsparpotentials eines Verzögerungshinweises kann durch das Steuergerät des Fahrzeugs ausgeführt werden und folgende Schritte umfassen:
Das Verfahren kann einen Verzögerungshinweis an den Fahrer des Fahrzeugs bereitstellen. Das Bereitstellen des Verzögerungshinweises kann durch bekannte Verfahren erfolgen. Beispielsweise kann der Verzögerungshinweis durch einen Verzögerungsassistenten bereitgestellt werden, wie er aus dem Stand der Technik bekannt ist. Beispielsweise kann der Verzögerungshinweis ein Verzögerungsziel, z.B. eine Geschwindigkeitsreduktion, ein Geschwindigkeitslimit, und/oder eine Einfahrt in einen Kreisverkehr, eine Kreuzung oder eine Kurve, umfassen.

Wenn der Verzögerungshinweis bereitgestellt wird, kann ein Startzeitpunkt $t_{Start}$ als der Zeitpunkt, an dem der Verzögerungshinweis dem Fahrer des Fahrzeugs bereitgestellt wird, bestimmt werden. Bei dem Bestimmen des Startzeitpunkts kann beispielweise eine Reaktionszeit des Fahrers berücksichtigt werden, so dass der Startzeitpunkt um die Reaktionszeit des Fahrers verzögert sein kann. Das Verfahren kann ferner einen Endzeitpunkt $t_{Ende}$ des Verzögerungshinweises bestimmen. Vorzugsweise ist der Endzeitpunkt der Zeitpunkt, an dem das Verzögerungsziel erreicht wird, und/oder der Zeitpunkt, zu dem der Verzögerungshinweis zurückgenommen wird. Zum Startzeitpunkt $t_{Start}$ kann die Fahrzeuggeschwindigkeit $v_{Ist,VZA\_Start}$ ermittelt werden. In Abhängigkeit des Verzögerungsziels kann eine Zielgeschwindigkeit $v_{VZA\_Ziel}$ der Verzögerung definiert werden. Die Werte der Zielgeschwindigkeit können beispielsweise als vordefinierte Größen auf dem Steuergerät gespeichert werden. In Abhängigkeit des Verzögerungsziels kann eine vordefinierte Zielgeschwindigkeit durch Auslesen eines entsprechenden Werts aus dem Speicher des Steuergeräts bestimmt werden. Ist das Verzögerungsziel ein Kreisverkehr, kann die Zielgeschwindigkeit beispielsweise 45 km/h betragen. Ist das Verzögerungsziel ein Tempolimit, kann als Zielgeschwindigkeit das Tempolimit oder das Tempolimit plus ein vordefinierter Wert, z.B. 5 km/h, gewählt werden.

Falls der Fahrer des Fahrzeugs den bereitgestellten Verzögerungshinweis übergeht bzw. nicht befolgt, kann das Verfahren einen realen Energieverbrauch zwischen dem Startzeitpunkt und dem Endzeitpunkt des Verzögerungshinweises ermitteln. Beispielsweise kann zur Ermittlung des realen Energieverbrauchs ein aktuell eingespritzter Kraftstoffverbrauch $Kr_{Real,VZA}$ aufsummieren werden, bis das Fahrzeug den Endzeitpunk des Verzögerungshinweises erreicht hat.

Weiterhin kann das Verfahren einen Referenzenergieverbrauch einer Referenzverzögerung in Abhängigkeit des Verzögerungshinweises berechnen. Die Referenzverzögerung ist dabei eine effiziente Verzögerung, mit der das Verzögerungsziel des Verzögerungshinweises erreicht werden kann. Die Referenzverzögerung kann mittels einer Referenzfahrt bestimmt werden. In der Referenzfahrt ist der Startzeitpunkt der Zeitpunkt, an dem das Fahrpedal nach einem erstmalig anliegenden Verzögerungshinweis gerade nicht mehr betätigt ist. Die Fahrtzeit $\Delta t_{VZA,Ziel}$ [s] der Referenzfahrt mit der Referenzverzögerung bis zum Erreichen der Zielgeschwindigkeit $v_{VZA,Ziel}$ kann beispielweise unter Verwendung eines vorgegebenen Kennfelds in Abhängigkeit von Startgeschwindigkeit und Zielgeschwindigkeit ermittelt werden und/oder über eine Ausrollkurve des Fahrzeugs über die Zeit mittels fahrzeugspezifischen Widerständen berechnet werden. Vereinfacht kann die Fahrtzeit durch eine Division der Distanz bis zum Ziel $s_{VZA,Ziel}$ und dem arithmetischen Mittel aus Startgeschwindigkeit und Zielgeschwindigkeit berechnet werden.

Die Referenzverzögerung kann durch das Fahrzeug in unterschiedlicher Weise realisiert werden. Der daraus resultierende Referenzenergieverbrauch, z.B. ein Referenzkraftstoffverbrauch, kann sich somit in Abhängigkeit der Referenzverzögerung unterscheiden. Beispielsweise kann ein Referenzkraftstoffverbrauch $Kr_{Ref,VZA}$ [l] davon abhängig sein, ob ein Befolgen des Verzögerungshinweises zu einem Segelvorgang mit aus- oder abgeschaltetem Verbrennungsmotor geführt hätte bzw. ob es zu einer Schubabschaltung und/oder ob es zu einer Rekuperation gekommen wäre.

Wäre es bei der Befolgung des Verzögerungshinweises oder bei einer effizienten Referenzverzögerung zu einem Segelvorgang mit eingeschaltetem Motor gekommen, ist vor allem ein Leerlaufverbrauch $kr_{LL}$ [l/h] relevant. Multipliziert mit der Verzögerungsdauer $\Delta t_{VZA,Ziel}$ kann der Referenzkraftstoffverbrauch bzw. der Referenzenergieverbrauch $Kr_{Ref,VZA}$ berechnet werden. Der Referenzkraftstoffverbrauch bzw. der Referenzenergieverbrauch kann eine Leistung von Nebenverbrauchern berücksichtigen. Beispielsweise kann eine während einer Realfahrt am Verbrennungsmotor wirkende Leistung eines Generators mit dem durchschnittlichen relativen Wirkungsgrad des Verbrennungsmotors multipliziert und anschließend auf den Heizwert des Kraftstoffs bezogen werden. Multipliziert mit der Zeit der Verzögerung kann der von dem Generator verursachte Kraftstoffverbrauch ermittelt werden. Zusätzlich ist die Abnahme bzw. Zunahme des Ladungszustands von elektrischen Speichern mittels einer entsprechenden Wirkungsgradkette zu berücksichtigen. Wäre es bei Befolgung des Verzögerungshinweises zu einem Segelvorgang mit ausgeschaltetem Motor gekommen, ist für die Referenzverzögerung ausschließlich die von den Nebenverbrauchern benötigte Energiemenge zu berücksichtigen. Ja nach gewünschter Genauigkeit kann alternativ der Referenzverbrauch auch vernachlässigt werden. Findet die Referenzverzögerung unter Schubabschaltung statt, d.h. mit eingeschaltetem Verbrennungsmotor, eingelegtem Gang und geschlossener Kupplung, kann vereinfacht davon ausgegangen werden, dass kein Kraftstoff eingespritzt wird. Auch die Versorgung der Nebenverbraucher kann je nach Fahrzeug durch das "Mitschleppen" des Verbrennungsmotors sowie des Generators übernommen werden. Eine Verzögerung mit Rekuperation speist einen Teil der kinetischen Energie des Fahrzeugs zurück in dessen beispielsweise elektrische Speicher. Die zurückgewonnene Energiemenge entspricht hier also einem negativen Verbrauch, welcher mittels einer Bilanz des Ladungszustands und unter Berücksichtigung der Wirkungsgradkette des Antriebs bei batterieelektrischen Fahrzeugen bzw. der Wirkungsgradkette zum Laden des elektrischen Speichers bei konventionellen Fahrzeugen berechnet werden kann.

Das Verfahren kann einen Differenzenergieverbrauch zwischen dem realen Energieverbrauch $Kr_{Real,VZA}$ und dem Referenzenergieverbrauch $Kr_{Ref,vzA}$ bestimmen. Das Energieeinsparpotential $Kr_{Pot,VZA,Einzel}$ [l/100km] eines einzelnen Verzögerungshinweises kann unter Verwendung des Differenzenergieverbrauchs berechnet und/oder bereitgestellt werden. Das Verfahren kann ferner Energieeinsparpotentiale einzelner Verzögerungshinweise summieren, um ein gesamtes Energieeinsparpotential $Kr_{Pot,VZA}$ aller übergangener bzw. nicht befolgter Verzögerungshinweise einer Fahrt zu erhalten. Das Energieeinsparpotential kann streckenbezogen oder prozentual angegeben werden, in dem das oben berechnete Energieeinsparpotential entsprechend angepasst wird.

Das Verfahren kann ferner Verzögerungshinweise verifizieren. Beispielsweise kann das Verfahren einen Kamerasensor verwenden, um zu verifizieren, ob ein Verzögerungsziel eines Verzögerungshinweises korrekt ist. Mittels des Kamerasensors können beispielsweise Verkehrsschilder oder Verkehrsknoten analysiert und mit dem Verzögerungsziel verglichen werden. Kann der Verzögerungshinweise bzw. das Verzögerungsziel des Verzögerungshinweises nicht verifiziert werden, kann ein entsprechendes Energieeinsparpotential nicht weiter in der Berechnung berücksichtigt werden.

Die oben beschriebene Verfahren zum Unterstützen einer energieeffizienten Verzögerung eines Fahrzeugs können auf Fahrzeuge mit Verbrennungsmotor, Fahrzeuge mit elektrischen Antrieb, sowie Fahrzeuge mit einem Antrieb aus einer Kombination aus Verbrennungsmotor und elektrischen Antrieb angewandt werden. Rein elektrisch betriebene Fahrzeuge unterscheiden sich bezüglich des Energieverbrauchs von Fahrzeugen mit einem Verbrennungsmotor dahingehend, dass statt eines Kraftstoffbedarfs ein elektrischer Energiebedarf anfällt. Bei rein elektrischen Fahrzeugen ist die Berechnungslogik für das Einsparpotential der Verzögerung identisch. Statt eines Kraftstoffverbrauchs wird jedoch der elektrische Energiebedarf ermittelt. Es kann mittels Berechnung von Drehzahl und Drehmoment am Rad und am Antriebsmotor der elektrische Energiebedarf des Elektromotors unter Berücksichtigung dessen Wirkungsgrads ermittelt werden. Zudem sind Verluste durch die Leistungselektronik und den Hochvoltspeicher zu berücksichtigen. Klimakompressor und Heizung sind gegebenenfalls elektrisch ausgeführt. Die Definition der Referenzverzögerung kann für elektrifizierte Fahrzeuge zudem entlang der maximalen Rekuperationsgrenze definiert werden, sodass alle Verzögerungen erst durch den Einsatz der mechanischen Bremse als ineffizient gewertet werden. Für Plug-In-Hybridfahrzeuge können verbrennungsmotorisch und elektrisch gefahrene Streckenanteile getrennt ausgewertet werden. Grundsätzlich sind bei der Berechnung der Potentiale die Besonderheiten des elektrischen Antriebsstrangs stets mit zu berücksichtigen, da auch bei verbrennungsmotorischer Fahrt ein oder mehrere Elektromotoren unterstützen oder generatorisch betrieben werden können. Das heißt bei jeder Potentialberechnung ist je nach gewünschter Genauigkeit eine energetische Bilanz um den Hochvoltspeicher erforderlich.

## Bezugszeichenliste

100 Verfahren
102 Ermitteln eines Referenzverzögerung
104 Bestimmen eines Startzeitpunkts
106 Ermitteln eines realen Energieverbrauchs
108 Berechnen einer Referenzzeit
110 Berechnen eines Energieverbrauchs für eine Differenzstrecke
112 Berechnen eines realen Gesamtenergieverbrauchs
114 Berechnen eines Referenzenergieverbrauchs
116 Bereitstellen eines Energieeinsparpotentials

## Patentansprüche

1. Verfahren (100) zum Unterstützen einer energieeffizienten Verzögerung eines Fahrzeugs, das Verfahren umfassend:

Ermitteln (102) einer Referenzverzögerung in Abhängigkeit einer aktuellen Geschwindigkeit bzw. eines Geschwindigkeitsverlaufs des Fahrzeugs;
Bestimmen (104) eines Startzeitpunkts und einer Startgeschwindigkeit einer Verzögerung des Fahrzeugs, wobei der Startzeitpunkt der Verzögerung ein Zeitpunkt ist, an dem die ermittelte Referenzverzögerung für ein vordefiniertes Zeitintervall erstmalig überschritten wird;
Ermitteln (106) eines realen Energieverbrauchs und einer realen Strecke zwischen dem Startzeitpunkt und einem aktuellen Zeitpunkt und/oder Endzeitpunkt der Verzögerung;
Berechnen (108) einer Referenzzeit und einer Referenzstrecke für eine Verzögerung mit der ermittelten Referenzverzögerung zwischen der bestimmten Startgeschwindigkeit und der aktuellen Geschwindigkeit und/oder Geschwindigkeit zum Endzeitpunkt des Fahrzeugs;
Berechnen (110) eines Energieverbrauchs für eine Differenzstrecke aus der ermittelten realen Strecke und der berechneten Referenzstrecke;
Berechnen (112) eines realen Gesamtenergieverbrauchs als Summe des ermittelten realen Energieverbrauchs der Verzögerung und des berechneten Energieverbrauchs für die Differenzstrecke;
Berechnen (114) eines Referenzenergieverbrauchs für die Referenzverzögerung von der Startgeschwindigkeit bis zur aktuellen und/oder Endgeschwindigkeit in Abhängigkeit einer vordefinierten Verzögerungsart der Referenzverzögerung und/oder in Abhängigkeit des ermittelten realen Energieverbrauchs der Verzögerung; und
Bereitstellen (116) eines Energieeinsparpotentials basierend auf einer Differenz des realen Gesamtenergieverbrauchs und des berechneten Referenzenergieverbrauchs.

2. Verfahren nach Anspruch 1, wobei die Referenzverzögerung in Abhängigkeit einer aktuellen Steigung einer Fahrbahn des Fahrzeugs korrigiert wird.

3. Verfahren nach einem der vorhergehenden Ansprüche, wobei der Referenzenergieverbrauch für eine der folgenden vordefinierten Verzögerungsarten der Referenzverzögerung ermittelt wird:

   - eine Referenzverzögerung eines Segelvorgangs mit einem eingeschalteten Antrieb des Fahrzeugs;
   - eine Referenzverzögerung eines Segelvorgangs mit einem ausgeschaltetem Antrieb des Fahrzeugs;
   - eine Referenzverzögerung unter einer (Teil-)Schubabschaltung des Antriebs des Fahrzeugs; und/oder
   - eine Referenzverzögerung unter Rekuperation von kinetischer Energie in einen fahrzeuginternen Speicher.

4. Verfahren nach einem der vorhergehenden Ansprüche, wobei der Startzeitpunkt der Verzögerung ein Zeitpunkt ist, an dem die ermittelte Referenzverzögerung für das vordefinierte Zeitintervall erstmalig überschritten wird und gleichzeitig das Bremspedal getreten ist; und/oder
   wobei die Startgeschwindigkeit die aktuelle Geschwindigkeit des Fahrzeugs zu dem Startzeitpunkt der Verzögerung ist.

5. Verfahren nach einem der vorhergehenden Ansprüche, wobei der Energieverbrauch der Differenzstrecke für eine Konstantfahrt mit der bestimmten Startgeschwindigkeit berechnet wird.

6. Verfahren nach einem der vorhergehenden Ansprüche, das Verfahren weiterhin umfassend:

   Bereitstellen eines Verzögerungshinweises umfassend ein Verzögerungsziel an einen Fahrer des Fahrzeugs;
   Bestimmen eines Startzeitpunkts und eines Endzeitpunkts des Verzögerungshinweises; Falls der Fahrer des Fahrzeugs den bereitgestellten Verzögerungshinweis übergeht:

   Ermitteln eines realen Energieverbrauchs zwischen dem Startzeitpunkt des Verzögerungshinweises und dem Endzeitpunkt des Verzögerungshinweises;
   Ermitteln eines Referenzenergieverbrauchs einer Referenzverzögerung in Abhängigkeit des Verzögerungshinweises und der vorgegebenen Verzögerungsart der Referenzverzögerung; und
   Berechnen eines Differenzenergieverbrauchs zwischen dem realen Energieverbrauch und dem Referenzenergieverbrauch; und
   Bereitstellen eines Energieeinsparpotentials für den bereitgestellten Verzögerungshinweis unter Verwendung des berechneten Differenzenergieverbrauchs.

7. Verfahren nach Anspruch 6, wobei der Endzeitpunkt des Verzögerungshinweises der Zeitpunkt ist, an dem das Verzögerungsziel des Verzögerungshinweises erreicht ist, und/oder wobei der Endzeitpunkt des Verzögerungshinweises der Zeitpunkt ist, an dem der Verzögerungshinweis nicht mehr bereitgestellt wird.

8. Computer-lesbares Medium zum Unterstützen eines energieverbrauchskontrollierten Verzögerns eines Fahrzeugs, wobei das Computer-lesbare Medium Instruktionen umfasst, die, wenn ausgeführt auf einem Steuergerät, das Verfahren nach einem der Ansprüche 1 bis 7 ausführen.

9. System zum Unterstützen eines energieverbrauchskontrollierten Verzögerns eines Fahrzeugs, das System umfassend:

   ein Steuergerät; und
   einen Energieverbrauchsassistenten, der auf dem Steuergerät ausgeführt wird, wobei der Energieverbrauchsassistent dazu ausgebildet ist, das Verfahren nach einem der Ansprüche 1 bis 8 auszuführen.

10. Fahrzeug umfassend das System nach Anspruch 9.

**Claims**

1. Method (100) for supporting energy-efficient deceleration of a vehicle, the method comprising:

   determining (102) a reference deceleration depending on a current speed or a speed profile of the vehicle;

determining (104) a starting time point and a starting speed of a deceleration of the vehicle; wherein the starting time point of the deceleration is a point in time at which the determined reference deceleration is first exceeded for a predefined interval of time;

determining (106) a real energy consumption and a real distance between the starting time point and a current time point and/or ending time point of the deceleration;

calculating (108) a reference time and a reference distance for a deceleration with the determined reference deceleration between the determined starting speed and the current speed and/or the speed at the ending time point of the vehicle;

calculating (110) an energy consumption for a differential distance from the determined real distance and the calculated reference distance;

calculating (112) a real total energy consumption as the sum of the determined real energy consumption of the deceleration and the calculated energy consumption for the differential distance;

calculating (114) a reference energy consumption for the reference deceleration from the starting speed to the current and/or ending speed depending on a predefined deceleration type of the reference deceleration and/or depending on the determined real energy consumption of the deceleration; and

providing (116) an energy-saving potential on the basis of a difference between the real total energy consumption and the calculated reference energy consumption.

2. Method according to Claim 1, wherein the reference deceleration is corrected depending on a current gradient of a roadway of the vehicle.

3. Method according to either of the preceding claims, wherein the reference energy consumption is determined for one of the following, predefined deceleration types of the reference deceleration:

   - a reference deceleration of a coasting procedure with an engaged drive of the vehicle;
   - a reference deceleration of a coasting procedure with a disengaged drive of the vehicle;
   - a reference deceleration with a (partial) propulsion cut-off of the drive of the vehicle; and/or
   - a reference deceleration with recovery of kinetic energy into a store internal to the vehicle.

4. Method according to one of the preceding claims, wherein the starting time point of the deceleration is a point in time at which the determined reference deceleration is first exceeded for a predefined interval of time, and the brake pedal is pressed at the same time; and/or
wherein the starting speed is the current speed of the vehicle at the starting time point of the deceleration.

5. Method according to one of the preceding claims, wherein the energy consumption of the differential distance is calculated for a constant-speed travel with the determined starting speed.

6. Method according to one of the preceding claims, the method furthermore comprising:

   providing a deceleration suggestion comprising a deceleration target to a driver of the vehicle;
   determining a starting time point and an ending time point of the deceleration suggestion;
   if the driver of the vehicle ignores the deceleration suggestion provided:

      determining a real energy consumption between the starting time point of the deceleration suggestion and the ending time point of the deceleration suggestion;
      determining a reference energy consumption of a reference deceleration depending on the deceleration suggestion and the specified deceleration type of the reference deceleration; and
      calculating a differential energy consumption between the real energy consumption and the reference energy consumption; and

   providing an energy-saving potential for the deceleration suggestion provided making use of the calculated differential energy consumption.

7. Method according to Claim 6, wherein the ending time point of the deceleration suggestion is the point in time at which the deceleration target of the deceleration suggestion is reached and/or
wherein the ending time point of the deceleration suggestion is the point in time at which the deceleration suggestion is no longer provided.

8. Computer-readable medium for supporting a deceleration of a vehicle with energy consumption control, wherein the computer-readable medium comprises instructions which, when executed on a control device, carry out the method according to one of Claims 1 to 7.

9. System for supporting a deceleration of a vehicle with energy consumption control, the system comprising:

   a control device; and
   an energy consumption assistant which is executed on the control device, wherein the energy consumption assistant is designed to carry out the method according to one of Claims 1 to 8.

10. Vehicle comprising the system according to Claim 9.

**Revendications**

1. Procédé (100) d'assistance d'un ralentissement énergétiquement efficace d'un véhicule, le procédé comprenant :

   identification (102) d'un ralentissement de référence en fonction d'une vitesse ou d'un tracé de vitesse actuel du véhicule ;
   détermination (104) d'un instant de départ et d'une vitesse de départ d'un ralentissement du véhicule, l'instant de départ du ralentissement étant un instant auquel le ralentissement de référence identifié est dépassé pour la première fois pendant un intervalle de temps prédéfini ;
   identification (106) d'une consommation d'énergie réelle et d'un trajet réel entre l'instant de départ et un instant actuel et/ou l'instant de fin du ralentissement ;
   calcul (108) d'un temps de référence et d'un trajet de référence pour un ralentissement avec le ralentissement de référence identifié entre la vitesse de départ déterminée et la vitesse actuelle et/ou la vitesse à l'instant de fin du véhicule ;
   calcul (110) d'une consommation d'énergie pour un trajet différentiel à partir du trajet réel identifié et du trajet de référence calculé ;
   calcul (112) d'une consommation d'énergie totale réelle en tant que somme de la consommation d'énergie réelle identifiée du ralentissement et la consommation d'énergie calculée pour le trajet différentiel ;
   calcul (114) d'une consommation d'énergie de référence pour le ralentissement de référence de la vitesse de départ jusqu'à la vitesse actuelle et/ou finale en fonction d'un mode de ralentissement prédéfini du ralentissement de référence et/ou en fonction de la consommation d'énergie réelle identifiée du ralentissement ; et
   fourniture (116) d'un potentiel d'économie d'énergie en se basant sur la différence entre la consommation d'énergie totale réelle et la consommation d'énergie de référence calculée.

2. Procédé selon la revendication 1, le ralentissement de référence étant corrigé en fonction d'une pente actuelle d'une voie de circulation du véhicule.

3. Procédé selon l'une des revendications précédentes, la consommation d'énergie de référence étant identifiée pour l'un des modes de ralentissement prédéfinis suivants du ralentissement de référence :

   - un ralentissement de référence d'une roue libre avec un mécanisme d'entraînement embrayé du véhicule ;
   - un ralentissement de référence d'une roue libre avec un mécanisme d'entraînement débrayé du véhicule ;
   - un ralentissement de référence sous une coupure (partielle) de propulsion du mécanisme d'entraînement du véhicule ; et/ou
   - un ralentissement de référence avec récupération d'énergie cinétique dans un accumulateur interne au véhicule.

4. Procédé selon l'une des revendications précédentes, l'instant de départ du ralentissement étant un instant auquel le ralentissement de référence identifié est dépassé pour la première fois pendant l'intervalle de temps prédéfini et la pédale de frein est enfoncé simultanément ; et/ou la vitesse de départ étant la vitesse actuelle du véhicule à l'instant de départ du ralentissement.

5. Procédé selon l'une des revendications précédentes, la consommation d'énergie du trajet différentiel étant calculée pour un déplacement constant avec la vitesse de départ déterminée.

6. Procédé selon l'une des revendications précédentes, le procédé comprenant en outre :

fourniture d'une indication de ralentissement comprenant un objectif de ralentissement à un conducteur du véhicule ;

détermination d'un instant de départ et d'un instant de fin de l'indication de ralentissement ;

dans le cas où le conducteur du véhicule néglige l'indication de ralentissement :

identification d'une consommation d'énergie réelle entre l'instant de départ de l'indication de ralentissement et l'instant de fin de l'indication de ralentissement ;

identification d'une consommation d'énergie de référence d'un ralentissement de référence en fonction de l'indication de ralentissement et du mode de ralentissement prédéfini du ralentissement de référence ; et

calcul d'une consommation d'énergie différentielle entre la consommation d'énergie réelle et la consommation d'énergie de référence ; et

fourniture d'un potentiel d'économie d'énergie pour l'indication de ralentissement fournie en utilisant la consommation d'énergie différentielle calculée.

7. Procédé selon la revendication 6, l'instant de fin de l'indication de ralentissement étant l'instant auquel l'objectif de ralentissement de l'indication de ralentissement est atteint, et/ou

l'instant de fin de l'indication de ralentissement étant l'instant auquel l'indication de ralentissement n'est plus fournie.

8. Support lisible par ordinateur destiné à assister un ralentissement avec consommation d'énergie contrôlée d'un véhicule, le support lisible par ordinateur comprenant des instructions qui, lorsqu'elles sont exécutées sur un contrôleur, mettent en œuvre le procédé selon l'une des revendications 1 à 7.

9. Système destiné à assister un ralentissement avec consommation d'énergie contrôlée d'un véhicule, le système comprenant :

un contrôleur ; et

un assistant de consommation d'énergie, lequel est exécuté sur le contrôleur, l'assistant de consommation d'énergie étant configuré pour mettre en œuvre le procédé selon l'une des revendications 1 à 8.

10. Véhicule comprenant un système selon la revendication 9.

100

| 102 |
|:---:|

| 104 |
|:---:|

| 106 |
|:---:|

| 108 |
|:---:|

| 110 |
|:---:|

| 112 |
|:---:|

| 114 |
|:---:|

| 116 |
|:---:|

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012013509 A1
- DE 102014222140 A1
- EP 2460708 A2
- DE 102012213229 A1